Europäisches Patentamt

European Patent Office

Office européen des brevets

(11) Publication number: **0 074 209**
A1

(12) **EUROPEAN PATENT APPLICATION**

(21) Application number: **82304447.4**

(22) Date of filing: **24.08.82**

(51) Int. Cl.³: **B 23 B 27/16**

(30) Priority: **03.09.81 US 298835**

(43) Date of publication of application:
**16.03.83 Bulletin 83/11**

(84) Designated Contracting States:
**DE FR GB IT SE**

(71) Applicant: **CARMET COMPANY**
**Two Oliver Plaza**
**Pittsburgh Pennsylvania 15222(US)**

(72) Inventor: **Boone, Gary A.**
**167 Coldstream**
**Spartansburg South Carolina 29303(US)**

(74) Representative: **Sheader, Brian N. et al,**
**ERIC POTTER & CLARKSON 5 Market Way Broad Street**
**Reading Berkshire, RG1 2BN(GB)**

(54) **Eight edge negative cutting insert.**

(57) A cutting insert (1) for a toolholder of a lathe has parallel square primary faces (2a, 2b) and the parallel edges (6) of the primary faces (2a, 2b) are joined by flat side faces (7). An elongated negative cutting edge (5) is formed in each primary face (2a, 2b) at each corner thereof and each cutting edge (5) is set back from the adjacent edge (6) of the primary face (2a, 2b) in which it is formed. The cutting edges (5) of one primary face being staggered by 90° relative to the cutting edges (5) of the other primary face. A hole (3) with countersinks (4) extends through the centre of the insert (1) and enables the insert (1) to be mounted in a square pocket of a toolholder by means of a screw.

Fig. 1

Fig. 2

EP 0 074 209 A1

1

## EIGHT-EDGE NEGATIVE CUTTING INSERT

The invention relates generally to a cutting insert for use in a tool holder on a lathe and more particularly to an indexable negative cutting insert which can successively present eight different cutting edges to a workpiece.

Single point cutting tools consisting of a tool holder having a cutting insert of a material such as tungsten carbide mounted therein are well known in the art. The inserts are generally disposable and are discarded when the cutting edges become dull.

In order to increase the life of a cutting insert and thereby decrease the cost, cutting inserts having a plurality of cutting edges which may be successively indexed into the cutting position have been used. A problem which exists with available multiple edge cutting inserts is the number of cutting edges which can be indexed into the cutting position. This is an important consideration since increasing the number of cutting edges increases the life of the insert and decreases the cost. For example, a rectangular insert can only be indexed in a tool holder once, and only four cutting edges can be presented to a workpiece.

An effort to increase the number of cutting edges available on a disposable insert is disclosed in United States Patent No. 3,142,110. The design disclosed in that patent offers an increased number of cutting edges, but the insert has a serious defect as the pocket to support the cutting insert in a tool holder must be accurately shaped to receive the complicated geometry of the insert. Another insert with multiple cutting edges is disclosed in United States Patent No. 3,490,117. That patent discloses an eight-edge positive cutting insert of the type disclosed in the aforementioned United States Patent No. 3,142,110. However, the cutting insert disclosed in this patent has an arcuate transition between opposed cutting edges on each side of the insert, and semi-cylindrical blocks are necessary to mount the insert within the square pocket of a tool holder. Such an arrangement is both expensive and inconvenient.

The present invention provides a cutting insert for insertion into a tool holder having a square pocket, said insert being indexable in the tool holder to present eight separate cutting edges to a workpiece, said insert having parallel spaced primary faces, said primary faces having a square configuration, side faces connecting parallel edges of said square primary faces, an elongated negative cutting edge formed in said primary faces at each corner of said primary faces, each of said cutting edges being set back from the edge of a primary face, the cutting edges on one primary face being staggered by 90$^\circ$ relative to the cutting edges on the other primary face and a hole in the centre of said primary faces extending completely through the cutting insert, whereby the cutting insert may be successively indexed to present eight separate cutting edges to a workpiece.

A negative cutting edge is formed along a portion of the length of each edge of both primary faces on offset corners so that there are four cutting edges on each of the primary faces of the insert to provide a total of eight cutting edges. Each cutting edge extends along only a portion of the length of an edge of the square primary face and of the adjoining side face so that a flat land is provided on each side face. The flat lands on perpendicular side faces contact a surface of the square insert pocket when the cutting insert is placed in a tool holder. Because of its square configuration, the cutting insert may be used in a standard tool holder having a conventional pocket and has excellent strength and durability for heavy duty roughing of metal.

The invention will be more particularly described with reference to the accompanying drawings, in which:-

Figure 1 is a plan view of a square cutting insert according to the present invention showing a primary face with a cutting edge at each corner;

Figure 2 is an elevation of the insert shown in

4

Figure 1;

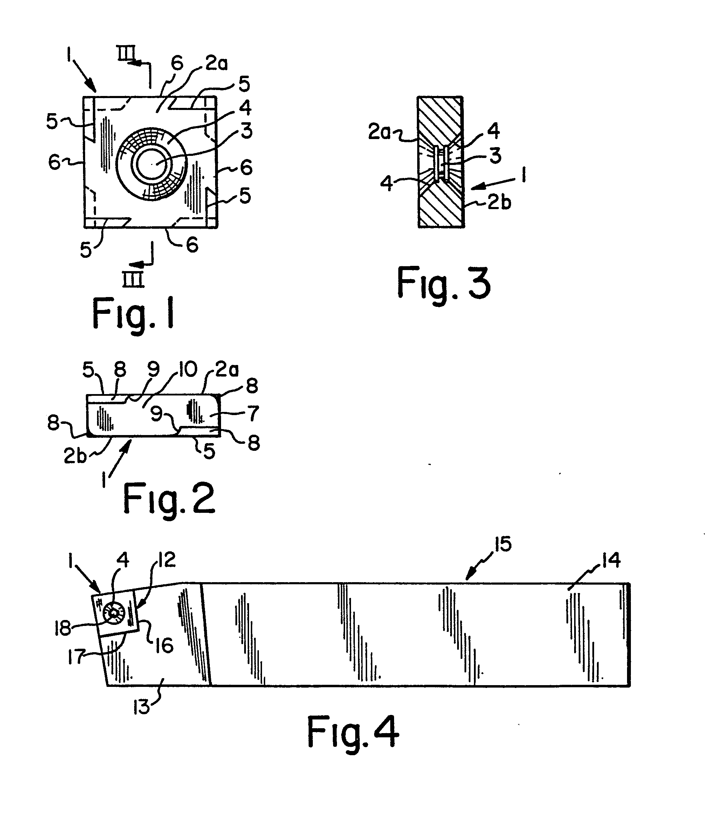

Figure 3 is a section on line III-III of Figure 1; and

Figure 4 is a side elevation of a tool holder with the cutting insert shown schematically.

Figures 1-3 of the drawings show a negative cutting insert 1 with spaced, parallel, primary faces 2a and 2b having a square configuration. A central bore 3 extends completely through the insert and a countersink 4 is formed in each primary face. The square configuration of the primary faces of the cutting insert makes it possible to utilize the cutting insert in a conventional square pocket in a standard tool holder. Each corner of both primary faces has a cutting edge 5 parallel to the edge 6 of the primary face and the adjacent side face 7 and set back from the surface of the side face which is parallel to the cutting edge. Each cutting edge 5 extends along less than one-half of the length of edge 6 of a primary face. All eight cutting edges 5 are identical, and the following description of a cutting edge applies to all of the cutting edges on the insert.

With specific reference to Figures 1 and 2 of the drawings, it will be seen that cutting edge 5 is formed by grinding away a portion of the edge 6 where the surface of a side face 7 joins a primary face 2a or 2b to form a rounded surface 8. The rounded surface joins the surface of the adjacent side face with the base of the cutting edge. A curved end 9 connects the inner end of rounded surface 8 and the flat surface of the primary face on which the cutting edge is formed.

Primary face 2b is on the opposite side of the cutting insert from primary face 2a and is formed with four cutting edges 5 which are located at each corner of the primary face but are offset by 90° from the four cutting edges formed on primary face 2a. Thus, the cutting edges on primary face 2b are staggered relative to the cutting edges on primary face 2a as shown in dotted lines in Figure 1 of the drawings.

A flat land 10 is located on each side face 7 between the juncture of curved ends 9 with the surface of each side face. The flat lands on perpendicular side faces cooperate with perpendicular surfaces of the pocket 12 on insert support end 13 at the end of a shank 14 of a tool holder 15 to position an insert 1 in the tool holder pocket. The shank of the tool holder will be supported on a lathe with the sides of the shank in the vertical position and the upper and lower edges in a generally horizontal position.

The square pocket formed in the upper outer corner of insert support end 13 has perpendicular surfaces with edges 16 and 17. The pocket also has a flat base (not shown) which is parallel to the tool holder shank and perpendicular to the surfaces having edges 16 and 17. The base of the pocket contains a threaded hole (not shown) which is located substantially centrally of the base and which receives a mounting screw 18 which extends through central bore 3 in the cutting insert located in pocket 12 to hold insert firmly in pocket 12. The head of mounting screw 18 will lie in a countersink 4 in primary face 2a or 2b when the screw is tightened. The negative cutting insert according to the invention provides eight cutting edges, and the countersink on both primary faces permits the cutting insert to be successively indexed eight times to present eight different cutting edges to a workpiece and thereby add to the life of the cutting insert. Additionally, each cutting edge is provided with complete backing to assure that it will not break off during roughing. The insert according to the invention is capable of roughing off considerably more metal in one pass than prior art inserts, and because of the eight cutting edges, it has a much longer life than known inserts.

The square configuration makes it possible to use the insert in a standard tool holder with a conventional square pocket.

## Claims

1.    A cutting insert (1) for insertion into a tool holder (15) having a square pocket (12), said insert being indexable in the tool holder to present eight separate cutting edges to a workpiece, characterised in said insert (1) having parallel spaced primary faces (2a,2b), said primary faces (2a,2b) having a square configuration, side faces (7) connecting parallel edges (6) of said square primary faces (2a,2b), an elongated negative cutting edge (5) formed in said primary faces (2a,2b) at each corner of said primary faces, each of said cutting edges (5) being set back from the edge of (6) of a primary face, the cutting edges (5) on one primary face (2a) being staggered by 90° relative to the cutting edges (5) on the other primary face (2b) and a hole (3) in the centre of said primary faces (2a,2b) extending completely through the cutting insert (1), whereby the cutting insert (1) may be successively indexed to present eight separate cutting edges to a workpiece.

2.    A cutting insert according to Claim 1, characterised in including a rounded surface (8) extending from the base of each of said cutting edges (5) to the surface of the side, face (7) adjacent to the cutting edge.

3.    A cutting insert according to Claim 1 or 2, characterised in including a countersink (4) in each of said primary faces (2a,2b) located at the centre hole (3), whereby a mounting screw (18) can be inserted through the centre hole (3) with its head located in a countersink (4) when said cutting insert (1) is mounted in the pocket (12) of a tool holder (15).

4.    A cutting insert according to Claim 2, characterised in that the surface (9) at the end of said rounded surface (8) is curved extending from said rounded surface (8) to the surface of the adjacent primary face (2a or 2b).

5.    A cutting insert according to any one of the preceding claims, characterised in that each said cutting edge (5) extends along less than half the length of the adjacent edge (6) of the primary face (2a,2b) in which it is formed.

Fig. 1

Fig. 3

Fig. 2

Fig. 4

European Patent Office

**EUROPEAN SEARCH REPORT**

| Category | Citation of document with indication, where appropriate, of relevant passages | Relevant to claim |
|---|---|---|
| | **DOCUMENTS CONSIDERED TO BE RELEVANT** | |
| X | DE – A – 2 336 598 (KYSOR CORP.)<br>* claims 10 to 16, pages 9, 10 ;<br>  fig. 7 to 9 *<br>&   US – A – 3 818 562 | 1,3,5 |
| X | TOOLING & PRODUCTION, Vol. 46, No. 11,<br>February 1981,<br>Solon,<br>P.C. MILLER et al. "Trends in cutting<br>tool inserts"<br>pages 70 to 76<br>* page 70; fig. * | 1,3 |
| P;X | US – A – 4 294 566 (G.A. BOONE)<br>* claims 1, 5, 9, 10 ; fig. 1 to 4 * | 1,3 |
| D,A | US – A – 3 142 110 (K. HERTEL)<br>* claim 1, fig. 3 to 5 * | 1 |
| D,A | US – A– 3 490 117 (K. HERTEL)<br>* claim 1, fig. 1 to 4 * | 1 |
| A | DE – B – 1 206 273 (K. HERTEL)<br>* fig. 2 to 4 ; reference 17 * | 1 |
| A | DE – B – 1 602 795 (K. HERTEL)<br>* claims 5, 6 ; fig. 1, 2 *<br>.../... | 1 |

**CLASSIFICATION OF THE APPLICATION (Int. Cl. 3)**

B 23 B 27/16

**TECHNICAL FIELDS SEARCHED (Int.Cl. 3)**

B 23 B 27/00
B 23 C 5/24

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 26-11-1982 | MARTIN |

EPO Form 1503.1 06.78

European Patent Office

| DOCUMENTS CONSIDERED TO BE RELEVANT | | | CLASSIFICATION OF THE APPLICATION (Int. Cl.²) |
|---|---|---|---|
| Category | Citation of document with indication, where appropriate, of relevant passages | Relevant to claim | |
| A | US - A - 4 074 949 (W. HOCHMUTH et al.) ---- | | |

TECHNICAL FIELDS SEARCHED (Int. Cl.³)